(19) Europäisches Patentamt
European Patent Office
Office européen des brevets

(11) Veröffentlichungsnummer: **0 107 145**
**A2**

(12) # EUROPÄISCHE PATENTANMELDUNG

(21) Anmeldenummer: **83110159.7**

(22) Anmeldetag: **12.10.83**

(51) Int. Cl.³: **C 08 F 4/04**, C 08 F 2/22

(30) Priorität: **22.10.82 DE 3239091**

(43) Veröffentlichungstag der Anmeldung: **02.05.84 Patentblatt 84/18**

(84) Benannte Vertragsstaaten: **BE DE FR GB IT NL**

(71) Anmelder: **BAYER AG, Konzernverwaltung RP Patentabteilung, D-5090 Leverkusen 1 Bayerwerk (DE)**

(72) Erfinder: **Rahlwes, Dieter, Dr., Ludwig-Girtler Strasse 1, D-5090 Leverkusen 1 (DE)**
Erfinder: **Niesen, Bernd, Höferweg 42, D-5090 Leverkusen 1 (DE)**
Erfinder: **Goossens, John, Dipl. Ing., Roggendorfstrasse 51, D-5000 Köln 80 (DE)**
Erfinder: **Wallpott, Gottfried, Gnadentaler Allee 14, D-4040 Neuss (DE)**
Erfinder: **Matner, Martin, Dr., Dorfstrasse 14, D-5068 Odenthal (DE)**

(54) **Verfahren zur Herstellung kationischer Latices.**

(57) Kationische Latices lassen sich in einfacher Weise dadurch herstellen, daß man nichtionische Monomere mit bis zu 10 Gew.-% an kationischen Comonomeren in Emulsion in Gegenwart einer kationischen Azoverbindung polymerisiert.

EP 0 107 145 A2

BAYER AKTIENGESELLSCHAFT 5090 Leverkusen, Bayerwerk

Zentralbereich
Patente, Marken und Lizenzen Jo/ABc

21.10.82

## Verfahren zur Herstellung kationischer Latices

Die Erfindung betrifft die Herstellung kationischer Latices, bei denen die kationische Gruppe kovalent an das Polymer gebunden ist, durch Copolymerisation.

Aus der DE-AS 1 546 236 ist ein Verfahren zur Herstellung kationischer Polymerisat-Dispersionen bekannt, bei dem copolymerisierbare Comonomere mit quartären Ammoniumgruppen eingesetzt werden. Bei diesem Verfahren werden zusätzlich kationische und nichtionische Emulgatoren und die üblichen Radikalbildner wie organische und anorganische Peroxide verwendet.

Die Scherstabilität der Dispersionen ist jedoch nicht ausreichend und es wird zunehmend Koagulatbildung während der Polymerisation beobachtet, wenn das die quartäre Ammoniumgruppe tragende Monomere in weniger als 20 Gewichtsprozent eingesetzt wird. Desgleichen muß der kationische Emulgator in für manche Anwendungen zu hoher Menge eingesetzt werden. Weiterhin neigen die Dispersionen zur Verfärbung.

Aus der DE-OS 2 454 397 ist ein Verfahren zur Herstellung scherstabiler kationischer Latices bekannt, bei dem ein kationische Ladungen tragendes wasserlösliches Polymer als Dispergiermittel für die Polymerisation der ungeladenen Monomeren wie Styrol, Acrylsäureester, Acrylnitrl usw. dient. Dabei muß das polymere kationische Dispergiermittel in einer der Emulsionspolymerisation vorgeschalteten Lösungspolymerisation hergestellt werden.

Aufgabe der Erfindung war es, ein einfaches Verfahren zur Herstellung kationischer Latices zu finden, das als Batch- oder Zulauf- oder kontinuierliche Emulsionspolymerisation durchführbar ist und zu scherstabilen kationischen Polymer-Dispersionen führt, bei denen die kationische Gruppe kovalent an das Polymer gebunden ist, wobei keine oder nur geringe Mengen an kationischen Comonomeren eingesetzt werden.

Überraschenderweise läßt sich diese Aufgabe lösen, wenn man nicht-ionische Monomere mit bis zu 10 Gew.-% an kationischen Comonomeren gegebenenfalls in Gegenwart üblicher kationischer Emulgatoren unter Verwendung von kationischen Azoverbindungen als Initiatoren in Emulsion copolymerisiert.

Gegenstand der Erfindung ist daher ein Verfahren zur Herstellung kationischer Latices, bei denen die kationische Gruppe kovalent an das Polymer gebunden ist, durch Emulsionspolymerisation von nicht-ionischen Monomeren und gegebenenfalls kationischen Comonomeren, dadurch gekennzeichnet, daß als Initiator 0,1 bis 6 Gew.-%, bezogen auf Monomermenge, einer kationischen Azoverbindung verwendet werden.

Die Menge der kationischen Comonomere kann bis zu 10 Gew.-%, bezogen auf Gesamtmonomere, betragen, wobei das kationische Monomer den Formeln

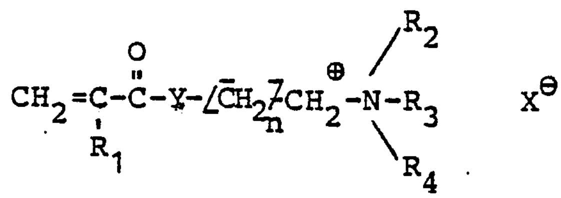 ,

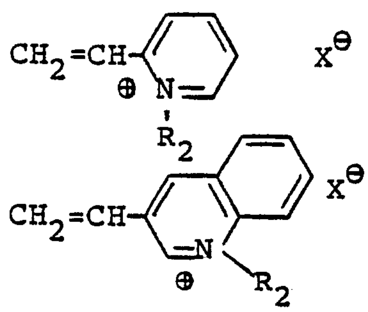 , oder

worin

$R_1$ Wasserstofff oder Methyl,

$R_2$, $R_3$ und $R_4$ unabhängig voneinander Wasserstoff oder gegebenenfalls substituiertes Alkyl,

Y O oder NH,

X ein Anion und

n eine ganze Zahl von 1 bis 5 bedeuten,

entspricht.

Die Reaktion kann in Gegenwart von bis zu 5 Gew.-%, bezogen auf Gesamtmonomermenge, an kationischem Emulgator durchgeführt werden.

Das Verfahren kann als Batch-, Zulauf- oder kontinuierliches Verfahren durchgeführt werden. Die Temperatur beträgt vorzugsweise 40 bis 80°C.

Vorzugsweise bedeutet $R_2$ Wasserstoff oder $C_1$-$C_4$-Alkyl, das durch Phenyl oder $C_1$-$C_4$-Alkoxycarbonyl substituiert sein kann. $R_3$ und $R_4$ stehen vorzugsweise für $C_1$-$C_4$-Alkyl. $X^{\ominus}$ ist insbesondere Chlorid oder Methosulfat.

Als nicht-ionische Monomere kommen insbesondere Styrol, Butadien, (Meth)Acrylsäureester, Acrylnitril, Ethylen, Propylen, Isopren und Vinylacetat in Frage.

Bevorzugte Radikalbildner sind insbesondere bis-amidinsubstituierte aliphatische Azoverbindungen, z.B. der Formeln

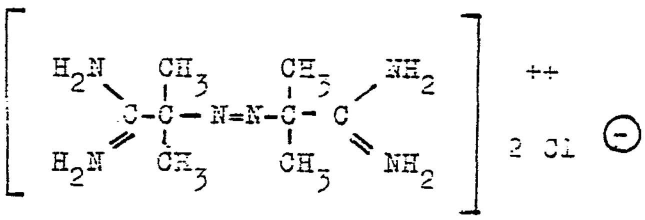

Initiator I

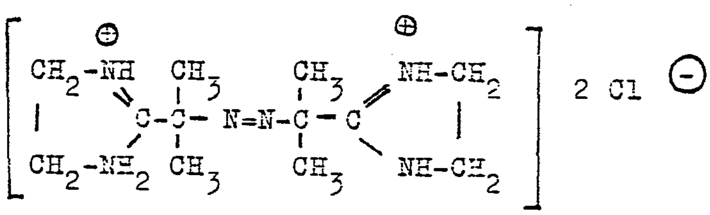

Initiator II

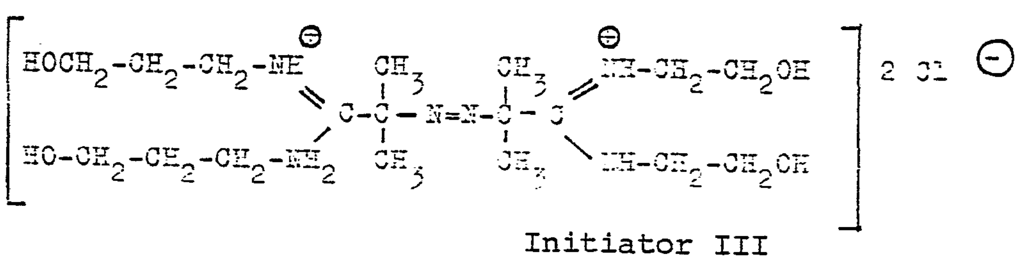

Initiator III

Als Emulgatoren werden insbesondere langkettige quartäre Ammoniumverbindungen eingesetzt, z.B. solche der Formeln

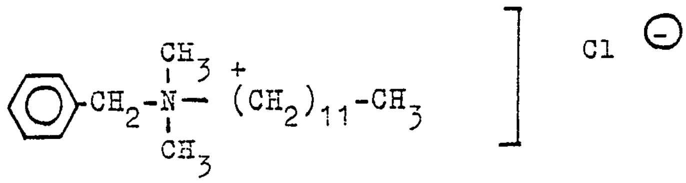

Emulgator I

$$\left[ CH_3-(CH_2)_{11}-\overset{\oplus}{N}(CH_3)_3 \right] Cl^{\ominus}$$

Emulgator II

oder

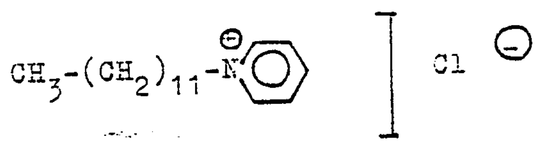

Emulgator III

Die Feststoffgehalte der Dispersionen liegen zwischen 35 und 60 %.

Zusätzlich können bei der Polymerisation Molgewichtsregler, wie die bekannten Alkylmercaptane oder Tetrachlorkohlenstoff und ähnliche Verbindungen benutzt werden.

Die Polymerisationen werden zweckmäßigerweise bis zu vollständigem Umsatz geführt.

Die kationischen Dispersionen eignen sich für mehrere Anwendungszwecke. Sie können z.B. vorteilhaft bei der Papierherstellung zur Erhöhung der Naßfestigkeit eingesetzt werden, wobei die kationische Ladung die notwendige Affinität zur negativ geladenen Cellulosefaser ergibt. Weiterhin dienen derartige Dispersionen in Beschichtungen für elektrostatische Kopierverfahren zur Erhöhung der elektrischen Leitfähigkeit. Bei der Bindung von natürlichem Lederfasermaterial ergeben die kationischen Ladungen ebenfalls zu den Proteinsegmenten der Faser eine gute Affinität, wodurch sich gute Bindeeigenschaften ergeben. Weiterhin können kleine Anteile der erfindungsgemäßen kationischen Dispersionen zur gezielten Koagulation von anionisch stabilisierten Dispersionen dienen.

Beispiel 1

In einem Dreihalskolben mit Rührer, Thermometer und Dosiertrichter wird eine Mischung aus 100 g Wasser, 2 g Emulgator I, 50 %ig, 4 g Dimethylamino-ethyl-methacrylat und 28 g 1-n-Salzsäure auf 60°C erwärmt. Dann werden 14,4 g Styrol und eine Lösung aus 12,7 g Wasser, 1,0 g Initiator II und 8,3 g 1-n-Salzsäure zugegeben. Nach 30 Minuten bei 60°C werden 81,6 g Styrol gleichmäßig in 4 Stunden zudosiert. Dann wird 3 Stunden bei 60°C nachgerührt.

Man erhält 252 g koagulatfreien Latex mit einer Teilchengröße von 126 nm, einem pH-Wert von 2,5 und einem Feststoffanteil von 40,8 % sowie einer Viskosität von 35 mPa.s (Brookfield Sp $1/60^{1}$/min). Der Latex ist im Bereich von pH 1 bis 4 stabil und wird durch pH-Erhöhung ab pH 5 destabilisiert.

Beispiel 2

Beispiel 1 wird wiederholt, jedoch werden anstelle des Dimethylaminoethylmethacrylats 4 g Trimethylammoniumethylmethacrylat als Methosulfat eingesetzt und die Polymerisation unter Stickstoff durchgeführt.

Man erhält 250 g koagulatfreien Latex mit einem Feststoffgehalt von 40 % und einer mittleren Teilchengröße von 145 nm. Der pH-Wert beträgt 6,0 und die Viskosität 19,5 mPa.s (Brookfield Sp. $1/60^{1}$/min).

Der Latex ist bei der Zugabe von Natronlauge stabil bis pH 13.

Beispiel 3

Ein Autoklav aus rostfreiem Stahl mit Rührer, beschickt mit 127 g Wasser, 2 g Emulgator I, 50 %ig, 0,01 g ethylendiamintetraessigsaurem Natrium und 4 g Trimethylammoniumethylmethacrylat-methosulfat wird evakuiert, 2-mal mit Stickstoff gespült, wiederum evakuiert und auf 55°C aufgeheizt. Dann werden 11,6 g Styrol, 0,02 g tert.-Dodecylmercaptan, 7,6 g Butadien und eine Lösung von 1,0 g Initiator II in 12,2 g Wasser und 7,8 g 1-n-Salzsäure zugedrückt. Der Autoklaveninhalt wird mit 250 U/min 3 Stunden bei 55°C gerührt. Dann werden 14,5 g Styrol, 0,025 g tert.-Dodecylmercaptan und 9,5 g Butadien zugedrückt und weitere 3 Stunden bei 55°C gerührt. Wiederum werden 14,5 g Styrol, 0,025 g tert. Dodecylmercaptan und 9,5 g Butadien zugedrückt.

Nach weiteren 3 Stunden Rühren bei 55°C werden schließlich 17,4 g Styrol, 0,03 g tert.-Dodecylmercaptan und 11,4 g Butadien zugedrückt. Nach einer Gesamtpolymerisationszeit von 20 Stunden wird der Latex durch Zusatz von 0,4 g Diethylhydroxylaminlösung, 25 %ig in Wasser, und 1 g Wasser abgestoppt.

Nach der Entgasung enthält man 251,5 g eines koagulatfreien Latex mit einem Feststoffanteil von 40 % und einer mittleren Teilchengröße von 140 nm. Der pH-Wert beträgt 5,4 und die Viskosität 12,5 mPa.s (Brookfield Sp. $1/60^{1}$/min). Der Latex ist von pH 2 bis pH 13 stabil.

Beispiel 4

Ein Autoklav aus rostfreiem Stahl mit Rührer, beschickt mit 636 g Wasser, 24 g Dimethylamino-ethylmethacrylat und 162 g 1 n-Salzsäure, wird evakuiert, 2-mal mit Stickstoff gespült, wiederum evakuiert und dann auf 60°C erwärmt.

Dann werden 57,9 g der Mischung aus 330 g Styrol, 3,3 g tert.-Dodecylmercaptan und 246 g Butadien, und eine Lösung aus 90 g Wasser, 8,4 g Initiator I und 0,5 g 1 n-Salzsäure zugedrückt. Der Autoklaveninhalt wird mit 250 U/min 45 min. bei 60°C gerührt. Danach wird der Rest der Mischung in 7 Stunden gleichmäßig zudosiert.

Danach wird 6 Stunden bei 60°C nachgerührt und dann mit 0,6 g Hydrochinon in 10 g Wasser abgestoppt. Nach der Entgasung erhält man 1500 g eines koagulatfreien Latex mit einem Feststoffanteil von 37,5 % und einer mittleren Teilchengröße von ca. 230 nm. Der pH-Wert beträgt 2,7 und die Viskosität 21,5 mPa.s (Brookfield Sp. 1/60 1/min).

Der Latex ist bei pH 1 bis 4,0 stabil und wird durch pH-Erhöhung ab pH 5,0 destabilisiert.

Patentansprüche

1. Verfahren zur Herstellung kationischer Latices, bei denen die kationische Gruppe kovalent an das Polymer gebunden ist, durch Emulsionspolymerisation von nicht-ionischen Monomeren und gegebenenfalls kationischen Comonomeren, dadurch gekennzeichnet, daß als Initiator 0,1 bis 6 Gew.-%, bezogen auf die Gesatmonomermenge, einer kationischen Azoverbindung verwendet werden.

2. Verfahren nach Anspruch 1, dadurch gekennzeichnet, daß 90 bis 100 Gew.-% Styrol, Butadien, (Meth)Acrylsäureester, Acrylnitril, Ethylen, Propylen, Isopren oder Vinylacetat oder Mischungen dieser Monomeren mit 10 bis 0 Gew.-% einer Verbindung der Formeln

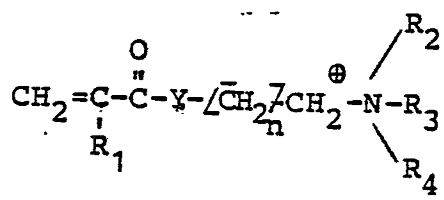 $X^{\ominus}$ ,

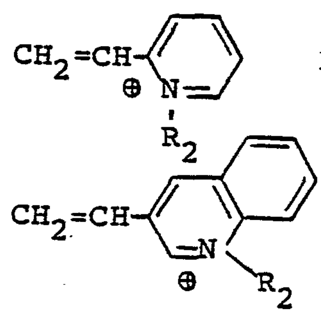 $X^{\ominus}$ , oder

$X^{\ominus}$

worin

$R_1$ Wasserstoff oder Methyl,

$R_2$, $R_3$ und $R_4$ unabhängig voneinander Wasserstoff oder gegebenenfalls substituiertes Alkyl,

Y  O oder NH,

X  ein Anion und

n  eine ganze Zahl von 1 bis 5 bedeuten,

in Gegenwart von 0 bis 5 Gew.-% eines kationischen Emulgators polymerisiert werden, wobei sich alle Prozentangaben auf die Monomermenge beziehen.

3. Verfahren nach Anspruch 1, dadurch gekennzeichnet, daß als Azoverbindung eine Verbindung der Formeln

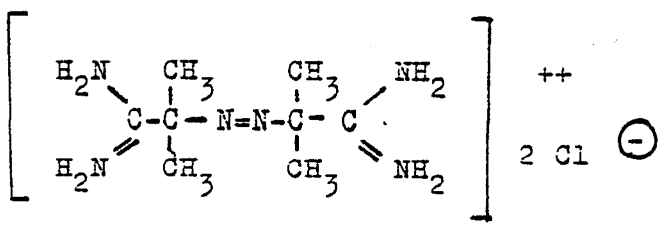

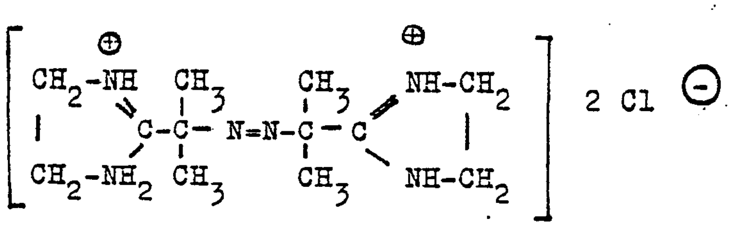

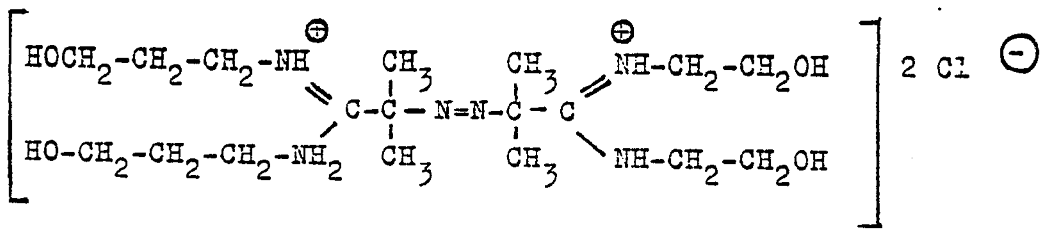

verwendet wird.